# EUROPÄISCHE PATENTSCHRIFT

(11) **EP 0 517 945 B1**
(45) Veröffentlichungstag und Bekanntmachung des Hinweises auf die Patenterteilung: **08.11.1995**
(21) Anmeldenummer: 91109793.9
(22) Anmeldetag: 14.06.1991
(51) Int. Cl.: B01D 29/05, B01D 29/66, B01D 29/68, B01D 29/70

(54) **Rückspülbares Filtergerät**
Back-wash filter apparatus
Appareil de filtration à nettoyage par contre-courrant

(43) Veröffentlichungstag der Anmeldung: 16.12.1992
(73) Patentinhaber: VALENTRON AG, CH-9050 Appenzell (CH)
(72) Erfinder: Seibel, Heinrich, D - 7101 Hardthausen-Lampoldshausen (DE); Herrmann, Rudi, D - 7100 Heilbronn (DE); Siller,Rudi, D - 7101 Abstatt (DE)
(74) Vertreter: Torggler, Paul, Dr.

(56) Entgegenhaltungen:
- EP-A- 0 385 050
- DE-A- 4 002 290
- GB-A- 333 850
- US-A- 1 826 361
- US-A- 2 183 577
- US-A- 2 310 587

## Beschreibung

Die Erfindung betrifft ein in Hauswasserleitungen verwendbares rückspülbares Filtergerät.

In Hauswasserleitungen wie allgemein in Wasserleitungen sind regelmäßig Filtergeräte eingebaut, die die in der Flüssigkeit vorhandenen und mitströmenden Verunreinigungen zurückhalten und damit aus der Flüssigkeit herausfiltern sollen. Die Verunreinigungen setzen nämlich mit der Zeit die Anströmseite des Filters zu. Dies hat nicht nur den Nachteil, daß die Wirksamkeit des Filters zurückgeht, sondern verursacht auch einen Druckabfall. Deshalb muß das Filtergerät in mehr oder weniger großen Abständen gereinigt werden. Bei den eingangs genannten rückspülbaren Filtergeräten erfolgt der Reinigungsvorgang durch Strömungsumkehr, wobei die während des Rückspülvorganges von der Filteroberfläche wieder abgelösten Verunreinigungen durch einen separaten Rückspülkanal zusammen mit dem Rückspülwasser aus dem Filtergerät herausgeführt werden.

Aus der EP-A 0121090 ist ein rückspülbares Filtergerät der eingangs genannten Art bekannt. Das Filterelement besitzt eine hülsenförmige Gestalt. Der Rückspülkanal für das Rückspülwasser trifft nur auf einen Teilbereich des Filterelements, so daß während des Rückspülvorganges Reinwasser durch diesen Teilbereich des Filterelements hindurchströmen und die auf der Innenseite der Filteroberfläche vorhandenen Verunreinigungen wegschwemmen kann. Durch Verschieben des auf der Innenseite des Filterelements endenden Rückspülkanals entlang der gesamten Oberfläche des Filters kann die ganze Filteroberfläche überstrichen und dabei gereinigt werden. Da die Reinigungswirkung weitgehend abhängig ist von der Strömungsgeschwindigkeit, mit der das Reinwasser gegen die zu reinigende Filteroberfläche strömt, sollte der Wasserleitungsdruck innerhalb dieses Filtergerätes möglichst groß sein, damit auch bei stark verschmutztem Filter noch eine ausreichende Saugkraft zum Starten und Aufrechterhalten des Reinigungsvorganges vorhanden ist. Vergleichbares gilt auch für die aus der EP-A-0120988 und der US-A-2310587 bekannten ähnlich funktionierenden Filtergeräte. Beim Filtergerät gemäß US-A-2310587 ist eine separate Leitungsverbindung von der Reinwasserkammer zu dem im Rückspülbetrieb wirksamen Teilbereich des Filterelements vorhanden, und in dieser Leitungsverbindung ist ein Leitungsbereich düsenartig ausgebildet.

Ausgehend von diesem vorbekannten Stand der Technik liegt der Erfindung die Aufgabe zugrunde, ein in Hauswasserleitungen verwendbares rückspülbares Filtergerät der genannten Gattung zu schaffen, das die aus dem Stand der Technik bekannten Nachteile nicht besitzt und das damit eine hohe Strömungsgeschwindigkeit der Rückspülflüssigkeit auch bei relativ niedrigen Leitungsdrücken ermöglicht. Diese Aufgabe wird erfindungsgemäß durch das Kennzeichen des Anspruchs 1 gelöst Mit diesem Filtergerät wird erreicht, daß auch bei niedrigen Leitungsdrücken das Reinwasser immer mit ausreichender Geschwindigkeit gegen die zu reinigende Filteroberfläche anströmen kann, wobei das durch das Einleiten eines gasförmigen Mediums entstehende Wasser-Gas-Gemisch einen günstigen Reinigungseffekt bewirkt, u.a. auch dadurch, daß durch das zusätzliche gasförmige Medium die Strömungsgeschwindigkeit des zum Rückspülen benützten Reinwassers erhöht wird. In den Leitungskanal eingeleitetes Gas, insbesondere Luft erhöht insgesamt die Strömungsgeschwindigkeit dieses Wasser-Luft-Gemisches. Der Reinigungsvorgang läßt sich damit problemlos auch bei stark verschmutzter Filteroberfläche einleiten und im übrigen auch bei geringen Leitungsdrücken aufrechterhalten.

Das gasförmige Medium kann beispielsweise die das Filtergerät umgebende Außenluft sein. Insbesondere in diesem Fall ist es zweckmäßig, wenn der Zutritt der Luft im Unterdruckbereich der Düse vorgesehen ist.

Nach einer Weiterbildung der Erfindung ist es auch möglich, zusätzlich ein Desinfektionsmittel mit in das Rückspülwasser einzuleiten. Die Filteroberfläche kann dann nicht nur von Verunreinigungen in Partikelform, sondern auch von chemisch oder biologisch schädlichen Belägen befreit werden. Durch Verschließen des Auslaßventils für das Reinwasser während dieses Desinfektionsvorganges kann verhindert werden, daß Desinfektionsmittel aus dem Reinwasser-Auslaßventil in die Hauswasserleitung entweichen kann.

Eine kostengünstige Ausbildung für ein vorstehendes Filtergerät ergibt sich nach einer Weiterbildung der Erfindung dadurch, daß das Filterelement scheibenförmig ausgebildet wird. Durch Vorbeibewegen der Filteroberfläche an dem ortsfest im Filtergerät vorhandenen düsenartigen Leitungskanal kann somit auf einfache Weise die gesamte Filteroberfläche des Filterelements mit Rückspülwasser beaufschlagt und dadurch gereinigt werden.

Um das Filterelement ausreichend feinmaschig und trotzdem ausreichend verformungsfest ausbilden zu können, stützt sich nach einem weiteren Merkmal der Erfindung die Filterscheibe auf einem mit Durchbrüchen versehenen Stützkörper auf, der vorzugsweise ortsfest im Filtergerät angeordnet ist. Die Filterscheibe rutscht dann bei ihrer relativen Bewegung innerhalb des Filtergeräts auf dem Stützkörper entlang.

Bei vollständig zugesetztem Filter, in einem Zustand also, in dem kein Rohwasser mehr durch den Filter hindurchströmen kann, und ferner bei geöffnetem Reinwasserauslaß, tritt im Extremfall der Zustand ein, daß kein Reinwasser für den Rückspülvorgang zur Verfügung steht. In diesem Zustand ist der Teilbereich des Filters, an dem von der Reinseite aus der düsenartige Rückspülkanal anliegt, gereinigt vorhanden. Sobald dieser Teilbereich aus der Flucht des Rückspülkanals herausbewegt wird, die Filterscheibe also um eine gewisse Anzahl von Winkelgraden gedreht wird, steht dieser gereinigte Teilbereich der Filteroberfläche zum Durchtritt des Rohwassers zur Verfügung, so daß damit auch Reinwasser zum Rückspülen vorhanden ist. Infolge der düsenartigen Ausbildung des Rückspülkanals reicht diese relativ geringe Reinwassermenge für den Rückspülvorgang aus.

Bei diesem Starten des Rückspülvorganges wirkt auf das Filterelement infolge des geöffneten Reinwasserkanals ein sehr hoher Druck. Diese sehr große Belastung kann bei sehr feinmaschigen Filterscheiben zu unerwünscht hohen Durchbiegungen der Scheibe führen, wodurch wiederum das Drehen der Filterscheibe im Extremfall unmöglich werden kann. Um auch in diesen Fällen ein problemloses Verdrehen der Filterscheibe zu ermöglichen, ist nach einem weiteren Merkmal der Erfindung ein zusätzliches Vorfilter in das Filtergerät eingebaut. Mit diesem Vorfilter läßt sich die als Hauptfilter wirkende Filterscheibe strömungsmäßig umgehen, so daß der auf die Filterscheibe bei geöffnetem Reinwasser-Auslaßventil wirkende Druck verringert werden kann.

Dieses Vorfilter ist während des Normalbetriebes durch ein Schieberelement abgedeckt, so daß es während des Normalbetriebes nicht durch Schmutzpartikel oder dergleichen zugesetzt werden kann. Dieses Schieberelement wird nun während des Rückspülvorganges von dem Filterelement entfernt, so daß das Rohwasser dann durch dieses Vorfilter in die Reinwasserkammer gelangen und damit zum Rückspülen verwendet werden kann.

Nach einem weiteren Merkmal der Erfindung kann das Bewegen des Schieberelementes und damit das Wirksamwerden des Vorfilters automatisch erfolgen. Die Bewegung dieses Schieberelementes kann automatisch ausgelöst werden durch die während des Rückspülvorganges im Rückspülgerät herrschenden, im Gegensatz zum Normalbetrieb unterschiedlich hohen Leitungsdrücke. Dazu ist die Rohwasserkammer leitungsmäßig über ein Kanalsystem mit dem Rückspülkanal verbunden. Während des Rückspülvorganges ist das Rückspül-Auslaßventil geöffnet.

Ein konstruktiv besonders einfaches Filtergerät mit hoher Funktionssicherheit bei großer Filterleistung und automatischer Arbeitsweise wird durch die Merkmale der Ansprüche 18 bis 24 geschaffen.

Weitere Ausführungsformen und Vorteile der Erfindung sind den sonstigen Merkmalen der Ansprüche sowie den nachstehenden Ausführungsbeispielen zu entnehmen.

Die Erfindung wird im folgenden anhand zweier in den Zeichnungen dargestellten Ausführungsbeispielen näher beschrieben. Es zeigen:
- Fig. 1: einen Längsschnitt durch ein Filtergerät eines ersten Ausführungsbeispiels im Normalbetrieb,
- Fig. 2: einen Längsschnitt durch das Filtergerät gemäß Fig. 1 im Rückspülbetrieb,
- Fig. 3: eine explosionsartige Teilansicht des in dem Filtergerät gemäß Fig. 1 und 2 vorhandenen Filterelements mit dem das Filterelement abstützenden Abstützkörper und mit angedeutetem Rückspülkanalsystem,
- Fig. 4: einen Längsschnitt durch ein zweites Ausführungsbeispiel, wobei die linke Hälfte den Normalbetrieb und die rechte Hälfte den Rückspülbetrieb zeigt.

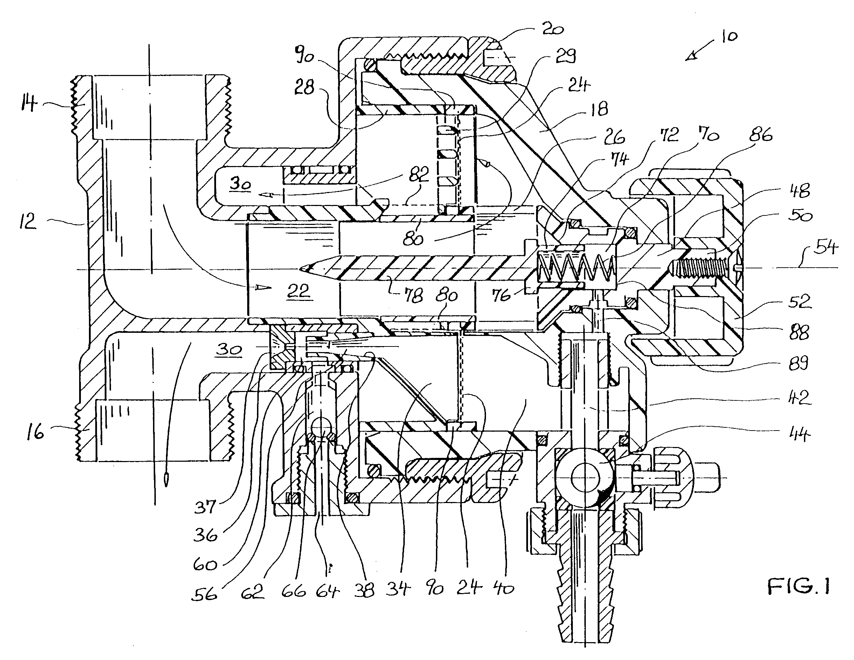

Das in den Fig. 1 bis 3 gezeigte Filtergerät 10 besitzt ein Rohranschlußteil 12, das mit seinen beiden Rohranschlüssen 14,16 an eine nicht dargestellte Flüssigkeitsleitung wie z.B. eine Hauswasserversorgungsleitung angeschlossen ist.

Über den in der Zeichnung oberen Rohranschluß 14 gelangt Rohwasser in das Rohranschlußteil 12 hinein, strömt dann durch das Filtergerät 10 hindurch, wo es von seinen Verunreinigungen gereinigt wird, und gelangt dann als Reinwasser durch den in der Zeichnung unteren Rohranschluß 16 wieder in das Leitungssystem hinein. Diese Strömungsrichtung ist durch die in Fig. 1 enthaltenen Pfeile dargestellt. In diesem Betriebszustand arbeitet das Filtergerät 10 im sogenannten Normalbetrieb.

An dem Rohranschlußteil 12 ist ein Gehäuseteil 18 mittels eines Klemmringes 20 befestigt. Dieser Klemmring 20 ist an dem Rohranschlußteil 12 angeschraubt und drückt das Gehäuseteil 18 fest und flüssigkeitsdicht gegen dieses Rohranschlußteil 12.

In dem Gehäuseteil 18 ist zentrisch eine Rohwasserkammer 22 vorhanden, die mit dem Rohranschluß 14 leitungsmäßig verbunden ist. Die Rohwasserkammer 22 ist von einem Filterelement 24 umgeben, das in Form einer Ringscheibe ausgebildet ist. In der Rohwasserkammer sind seitliche Öffnungen 26, durch die hindurch das in der Rohwasserkammer 22 befindliche Rohwassernach außen umgeleitet und - in Fig. 1 - von rechts nach links durch das Filterelement 24 hindurchströmen kann.

Das Filterelement 24, das aus einer oder mehreren Lagen feinmaschigen Drahtgewebes besteht, stützt sich in Strömungsrichtung auf einem Stützkörper 28 ab, der in seinen das Filterelement 24 berührenden Bereichen eine durchbrochene Oberflächenausbildung 29 besitzt, so daß das durch das Filterelement 24 hindurchgelangende Reinwasser durch den Stützkörper 28 hindurchströmen kann.

Aus dem Bereich des Stützkörpers 28 gelangt das nunmehr gereinigte Wasser, das Reinwasser, in eine Ringkammer 30, die mit dem Rohranschluß 16 leitungsmäßig verbunden ist.

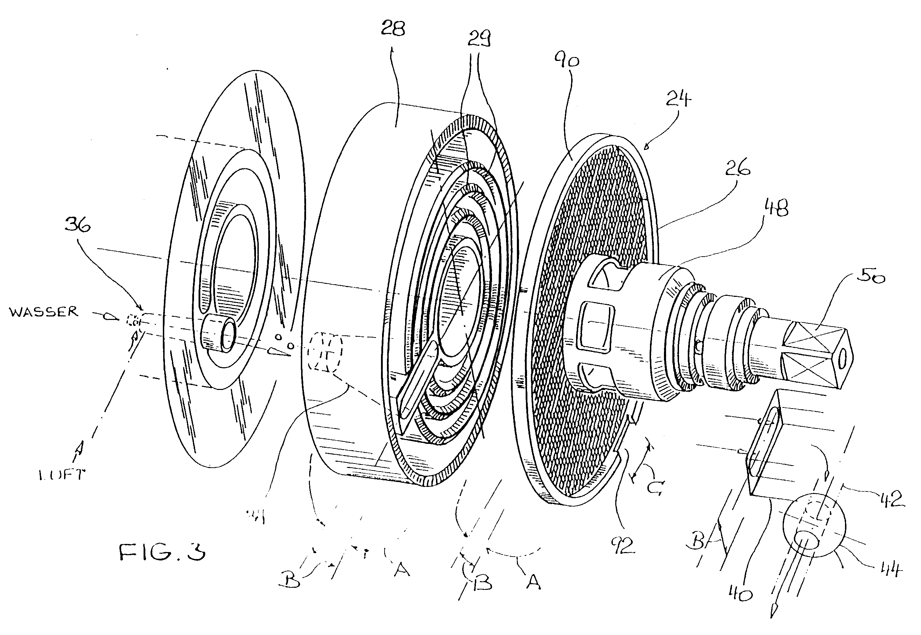

Diese Strömungsmöglichkeit durch das Filterelement 24 hindurch erfolgt in einem Bereich A (Fig. 3) des Filterelementes 24, der sich fast über seinen gesamten Flächenbereich erstreckt. In dem verbleibenden Restbereich B (Fig. 3) kann kein Rohwasser im Normalbetrieb durch das Filterelement 24 hindurchströmen, da an der Rückseite des Filterelements 24 in diesem Bereich B unmittelbar ein Kanalstück 34 anliegt. Dieses Kanalstück 34 stellt das filterseitige Ende einer Düse 36 dar, die mit ihrem konischen Einlauf 37 in die Ringkammer und mit ihrem endseitigen Erweiterungsbereich 38 in das Kanalstück 34 einmündet.

Auf der gegenüberliegenden Seite des Filterelementes 24 setzt sich das Kanalstück 34 in einem Kanalstück 40 fort, das in einen aus dem Gehäuseteil 18 herausführenden Kanal 42 einmündet. Der Kanal 42 läßt sich durch ein Kugelventil 44 verschließen bzw. öffnen. Sofern das Ventil 44 geöffnet wird, kann aus der Ringkammer 30 Reinwasser durch die Düse 36 in das Kanalstück 34 hineinströmen, von dort im Bereich B durch das Filterelement 24 hindurch und in das Kanalstück 40 hineinströmen und weiter durch den Kanal 42 hindurch aus dem Filtergerät 10 heraustreten. Dieser Betriebszustand des Filtergerätes 10 betrifft den Rückspülbetrieb, bei dem das Filterelement 24 jeweils in einem Teilbereich (Bereich B) gereinigt wird.

Das Filterelement 24 sitzt quer (rechtwinklig) und koaxial auf einem Schaft 48, der im Bereich des Filterelements 24 mit Durchbrüchen versehen ist, die die Öffnungen 26 darstellen. Der Schaft 48 ragt durch das Gehäuseteil 18 hindurch und besitzt an seinem Ende einen profilierten Endquerschnitt 50, auf dem ein Handrad 52 aufgeschraubt ist. Mit Hilfe des Handrades 52 läßt sich der Schaft 48 und damit das Filterelement 24 um die zentrische Achse 54 drehen. Das Filterelement 24 gleitet bei dieser Drehbewegung auf dem Stützkörper 28 entlang. Gleichzeitig kommen bei dieser Drehbewegung immer neue Bereiche der Filteroberfläche in den Bereich B und damit in den Bereich der beidseitig an das Filterelement sich anschließenden Kanalstücke 34,40, so daß immer neue Oberflächenbereiche des Filterelementes 24 von dem Rückspülwasser beaufschlagt und damit gereinigt werden können.

In der Düse 36 ist ein den Düsenkanal 56 umgebender Ringspalt 60 vorhanden. In diesen Ringspalt 60 mündet quer ein Kanal 62 hinein, der seinerseits in einen Kanal 64 mündet, welcher aus dem Filtergerät 10 ins Freie herausführt. Der Kanal 64 wird durch eine Kugel 66 flüssigkeits- und gasdicht verschlossen. Die Kugel sitzt dabei infolge ihres Eigengewichtes und der im Normalbetrieb herrschenden Druckverhältnisse auf der Mündung des Kanals 64 innenseitig auf (Fig. 1).

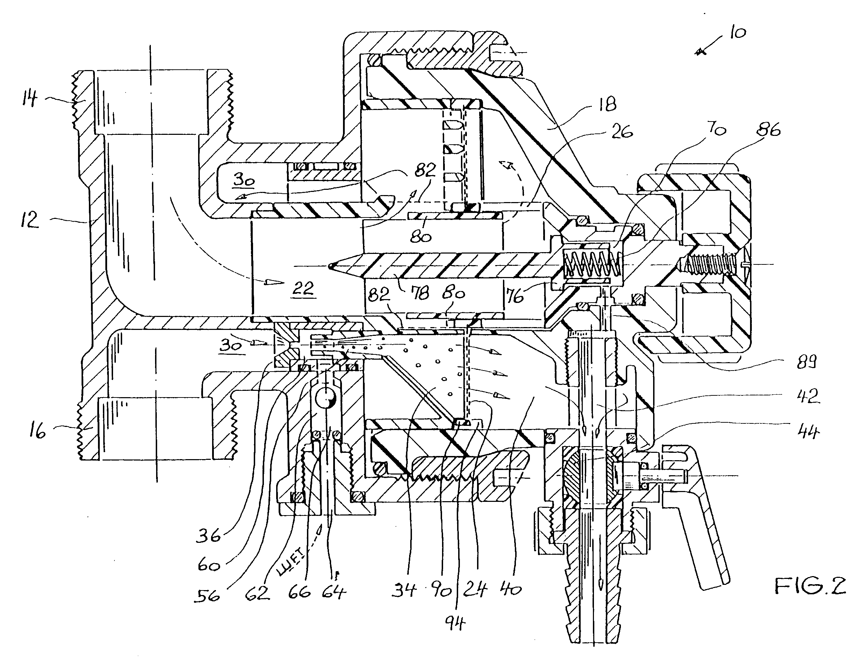

Im Rückspülbetrieb (Fig. 2), bei dem aus der Ringkammer 30 Reinwasser durch die Düse 36 hindurchströmt, herrscht in dem Ringspalt 60 ein Unterdruck, der auch in dem Kanal 62 wirkt, mit der Folge, daß die Kugel 66 sich nach oben bewegt und damit die Öffnung des Kanals 64 freigibt (Fig. 2). Während des Rückspülvorganges kann damit von außen Luft durch die Kanäle 64,62 und Ringspalt 60 in den Düsenkanal 56 der Düse 36 eintreten. Dies hat zur Folge, daß sich in dem Düsenkanal ein Wasser-Luft-Gemisch bildet, dessen Strömungsgeschwindigkeit größer ist, als es die Strömungsgeschwindigkeit ohne Zutritt der Luft wäre.

Die zentrisch in dem Gehäuseteil 18 vorhandene Rohwasserkammer 22 setzt sich an ihrem - in der Zeichnung rechten - Ende in einer sackartigen Kammer 70 fort. Diese Kammer 70 wird auf ihrer zur Rohwasserkammer 22 zeigenden Öffnung 72 durch eine Büchse 74 verschlossen, die mit ihrem Deckelteil 76 in die Rohwasserkammer 22 hineinragt. An diesem Deckelteil 76 ist ein stabförmiger Hülsenkern 78 befestigt, der in die Rohwasserkammer 22 zentrisch hineinragt. An diesem Hülsenkern 78 ist eine Schieberhülse 80 befestigt, die von innen her bei der Darstellung gemäß Fig. 1 einen hohlzylindrischen weiteren Filter 82 zur Rohwasserkammer 22 hin vollständig und bei der Darstellung gemäß Fig. 2 nicht vollständig bedeckt. Die jeweils unterschiedlichen Positionen der Schieberhülse 80 erfolgen durch eine axiale Verstellung der Schieberhülse 80 und damit durch eine entsprechende Verstellung des Hülsenkerns 78 und damit der Büchse 74 in Richtung der Achse 54. Die Büchse 74 wird durch eine Schraubenfeder 86 von der rechten Rückwand 88 der sackartigen Kammer 70 weggedrückt, so wie es in Fig. 1 während des Normalbetriebes dargestellt ist.

Die Kammer 70 ist durch einen weiteren Kanal 89 mit dem zum Kugelventil 44 führenden Kanal 42 verbunden. Der in dem Kanal 42 jeweils herrschende Druck baut sich damit auch in der Kammer 70 auf.

Im Rückspülbetrieb herrscht in der Kammer 70 ein gegenüber dem Normalbetrieb niedrigerer Druck, was durch das Öffnen des Kugelventils 44 bewirkt wird. Durch diesen niedrigeren Druck in der Kammer 70 wird der Hülsenkern 78 und damit auch die Büchse 74 nach rechts in die Kammer 70 hineingedrückt, wodurch sich die Feder 86 zusammenzieht. Dieser Zustand ist in Fig. 2 dargestellt.

Bei diesem Verschließen der Kammer 70 und damit beim Verstellen der Schieberhülse 80 nach rechts in ihre in Fig. 2 dargestellte Position wird der hohlzylindrische Filter 82 aus Richtung der Rohwasserkammer 22 teilweise freigelegt, so daß Wasser aus der Rohwasserkammer 22 seitlich in den Bereich des Stützkörpers 28 einströmen kann. Das Filterelement 24 wird damit zumindest teilweise umgangen. Damit wird erreicht, daß auch bei einem vollständig mit Verunreinigungen zugesetzten Filterelement 24 gereinigtes Wasser in der Ringkammer 30 vorhanden sein und damit zum Rückspülen zur Verfügung stehen kann.

Durch Verschließen beispielsweise des zwischen dem Kanal 42 und der Kammer 70 vorhandenen Kanals 89 kann erreicht werden, daß sowohl im Normalbetrieb als auch im Rückspülbetrieb immer gleiche Druckverhältnisse in der Kammer 70 herrschen. Dadurch kann eine axiale Verstellung der Schieberhülse 80 ausgeschaltet werden, so daß das Filter 82 nicht verwendet werden kann. Da das Filter 82 nur in sehr seltenen extremen Betriebszuständen benötigt wird, ist die Standzeit dieses Filters 82 äußerst lang, so daß dieses Filter 82 mehrere Jahre nicht gereinigt zu werden braucht.

Das im vorliegenden Beispielsfall verwendete Filterelement 24 besitzt auf der Anströmseite ein feinmaschiges und auf der Abströmseite ein grobmaschiges metallisches Gewebenetz. Selbstverständlich können diesbezüglich beliebig große Maschenstrukturen ausgebildet werden. Es ist auch möglich, auf dem Filterelement nur eine Gewebelage und dafür gegebenenfalls auf dem Stützkörper eine zweite, grobe Maschenlage auszubilden.

Das Rohranschlußteil 12 kann ferner für den Anschluß eines Druckminderers oder eines Wasserzählers ausgebildet werden. Mit Hilfe des Klemmringes 20 kann das Gehäuseteil 18 beliebig bezüglich der Ausrichtung des Rohranschlußteils 12 ausgerichtet werden.

Das Handrad 52 wird im vorliegenden Beispielsfall manuell betätigt und damit das Filterelement 24 manuell in dem Gehäuseteil 18 gedreht. Selbstverständlich ist es möglich, den Schaft 48 auch motorisch zu drehen. Die Drehbewegung kann ausgelöst werden bei einem vorgegebenen maximalen Verschmutzungsgrad des Filterelements 24 und kann dementsprechend beendet werden bei einem vorgegebenen minimalen Verschmutzungsgrad des Filterelementes. Da in Abhängigkeit von dem Verschmutzungsgrad ein unterschiedlich hoher Druckanstieb bewirkt wird, kann der jeweils herrschende Druck zum Steuern der Drehbewegung des Filterelementes 24 herangezogen werden. Zusätzlich zu der Drehbewegung muß allerdings das Kugelventil 44 geöffnet werden, da nur dann das zum Rückspülen verwendete Wasser aus dem Filtergerät 12 herausgeführt und damit der Reinigungsprozeß vonstatten gehen kann.

Der die Filterscheibe umgebende Stützring 90 (Fig. 3) weist an einer Stelle eine einseitige Einkerbung 92 auf. Die in Ringrichtung sich erstreckende Länge C dieser Einkerbung 92 ist größer als das Maß B. Sofern sich die Einkerbung im Bereich des Kanalstücks 40 befindet (Fig. 2), können jeweils von außen neben dem Kanalstück 40 vorhandene Verunreinigungen seitlich in das Kanalstück 40 durch die seitlich in der Kanalwandung vorhandenen beidseitigen Öffnungen 94 (Fig. 2) hineinströmen, so daß auch von der Oberfläche des Filterelements 24 heruntergefallene und außen neben dem Kanalstück 40 sich befindende Verunreinigungsteilchen ebenfalls beim Rückspülen mit in das Kanalstück 40 hineingesaugt und durch den Kanal 42 aus dem Filtergerät 10 entfernt werden können.

Da bei diesem Ansaugen von Teilchen aus den seitlich neben dem Kanalstück 40 vorhandenen Bereichen auch Rohwasser mit in das Kanalstück 40 angesaugt wird, ist die Einkerbung 92 nicht über den gesamten Stützring 90, sondern nur in einem kleinen Bereich C vorhanden. Nur wenn das Filterelement 24 mit seinem Bereich C relativ zum Kanalstück 40 ausgerichtet ist, können Flüssigkeit und Verunreinigungsteilchen, die seitlich neben dem Kanalstück 40 vorhanden sind, durch den Kanal 42 herausgeschwemmt werden. In jeder anderen Drehstellung des Filterelements 24 liegt der Stützring 90 flüssigkeitsdicht an der Wandung des Kanalstücks 40 an, so daß in das Kanalstück 40 nur Spülflüssigkeit durch das Filterelement 24 im Bereich B hineindringen kann.

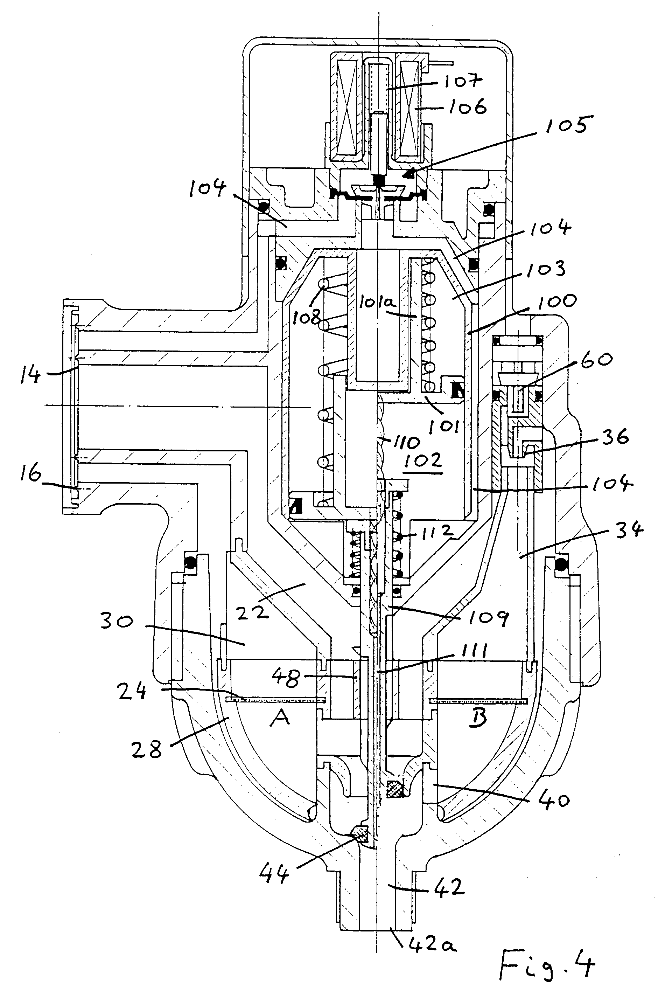

Das in Fig. 4 gezeigte zweite Ausführungsbeispiel stimmt in vielen Teilen mit dem ersten Ausführungsbeispiel überein, so daß gleiche oder gleich wirkende Teile mit denselben Bezugszeichen versehen sind:

Das Rohwasser gelangt über einen inneren Rohranschluß 14 zur Rohwasserkammer 22 unterhalb des Filterelements 24, um durch die Bereiche A des Filterelements nach oben in die Reinwasserkammer 30 zu treten. Von dort gelangt das Reinwasser über den äußeren koaxialen Rohranschluß 16 nach außen. Dieser Normalbetrieb ist in der Fig. 4 in der linken Hälfte dargestellt und arbeitet in derselben Weise wie beim ersten Ausführungsbeispiel. Das Ventil 44 befindet sich hierbei in der unteren geschlossenen Stellung, so daß aus dem Schmutzauslaß 42a kein Wasser austreten kann.

Während dieses Normalbetriebes werden die mit A bezeichneten Filterelementbereiche mit Schmutzteilchen besetzt und können durch Drehung des ringfförmigen Filterelements 24 in den rechten Teil der Fig. 4 gebracht werden, der den Rückspülbetrieb zeigt.

Während des Rückspülbetriebes strömt mit Luft versetztes Reinwasser über die Injektordüse 36 in das Kanalstück 34, um den Filterelementbereich B nach unten zu durchströmen und den auf dem Filterelement befindlichen Schmutz in das Kanalstück 40 und über das geöffnete Ventil 44 in das Kanalstück 42 zum Schmutzauslaß 42a zu bringen.

In Höhe der Rohranschlüsse 14,16 und der Injektordüse 36 befindet sich ein Zylinder 100, in dem ein Kolben 101 auf und ab beweglich ist. Der Kolben trennt mit seiner Kolbenfläche den Zylinder 100 in eine untere Kolbenkammer 102 und in eine obere Kolbenkammer 103. Die untere Kolbenkammer ist über eine Leitung 104 mit der Reinwasserkammer 30 bzw. dem Auslaß für Reinwasser verbunden. In der Leitung 104 befindet sich ein Magnetmembranventil 105, das durch eine Spule 106 elektrisch von einer geschlossenen in eine geöffnete Stellung gegen den Druck einer Feder 107 bewegbar ist.

Wird das Ventil 105 geöffnet, so wird der Kolben 101 durch den Druck des Reinwassers gegen den Druck einer Schraubendruckfeder 108 angehoben, die sich in der oberen Kolbenkammer 103 koaxial auf dem Kolbenschaft 101a befindet. Mit diesem Anheben nimmt der Kolben 101 eine koaxial nach unten reichende Ventilstange 109 mit nach oben, deren unteres Ende das Ventilstellglied des Ventils 44 trägt. Damit wird durch das Anheben des Kolbens 101 das Ventil 44 geöffnet.

Im oberen Bereich ist in der Ventilstange 109 eine koaxiale Spindel 110 gelagert, die sich durch den Kolben 101 erstreckt und beim Anheben des Kolbens 101 durch diesen Kolben und/oder durch die Spindel 110 verdreht wird. An der Spindel 110 ist der Schaft 48 des Filterelements 24 befestigt, so daß ein Verdrehen der Spindel 110 zu einem Verdrehen des koaxialen Schaftes 48 und damit zu einem Verdrehen des koaxialen Filterelements 24 führt.

Das Filtergerät nach dem zweiten Ausführungsbeispiel (Fig. 4) hat damit folgende Arbeitsweise:

Während des normalen Filterbetriebs ist das Ventil 44 geschlossen und die Bereiche A des Filterelements 24 filtern das Rohwasser zum Reinwasser. Soll das Filterelement 24 durch Rückspülen gereinigt werden, so wird durch Anlegen einer elektrischen Spannung das Magnetventil 105 geöffnet. Damit strömt Reinwasser in die untere Kolbenkammer 102 und der Kolben 101 wird angehoben, wodurch das Ventil 44 geöffnet und das Filterelement 24 verdreht wird. Auf dem weiteren Weg des Kolbens wird die Spindel und damit das Sieb um insgesamt 360 Grad gedreht, so daß alle Siebsegmente gereinigt werden. Während dieses Arbeitsvorganges wird über die Injektordüse 36 ein Reinwasser/Luftgemisch durch den Bereich B des Filterelements 24 gedrückt, wie dies bereits beim ersten Ausführungsbeispiel beschrieben wird.

Danach wird das Ventil 105 geschlossen, so daß kein Druck mehr über die Leitung 104 der unteren Kolbenkammer 102 zugeführt wird. Der Druck in der unteren Kolbenkammer 102 wird abgebaut, indem durch eine koaxial in der Ventilstange 109 befindliche Leitung 111 das in der Kolbenkammer 102 befindliche Wasser zum Auslaß 42a geführt wird. Diese Leitung 111 kann ständig geöffnet sein, da ihr Querschnitt geringer ist als der Querschnitt der Leitung 104. Es ist also unerheblich, daß während des Druckaufbaues in der unteren Kolbenkammer 102 ständig etwas Wasser zum Auslaß 42a fließt, da die über die Leitung 104 zuströmende Wassermenge stets erheblich größer ist.

Aufgrund des absinkenden Druckes in der unteren Kolbenkammer 102 wird der Kolben 101 durch die Feder 108 in die Anfangsstellung zurückgedrückt, wobei die Ventilstange 109 entweder direkt durch den Kolben 101 oder wie im Ausführungsbeispiel durch eine koaxiale Schraubendruckfeder 112 nach unten geschoben wird. Hierdurch wird das Ventil 44 geschlossen und das Filtergerät befindet sich wieder im Normalbetrieb.

## Patentansprüche

1. In Hauswasserleitungen verwendbares rückspülbares Filtergerät (10) mit
- einem Einlaß (14) für Rohwasser,
- einer mit diesem Einlaß verbundenen Rohwasserkammer (22),
- einem Auslaß (16) für Reinwasser
- einer mit diesem Auslaß verbundene Reinwasserkammer (30),
- einem Filterelement (24), welches zwischen der Rohwasserkammer (22) und der Reinwasserkammer (30) angeordnet ist und welches einen Teilbereich (B) aufweist, der im Normalbetrieb unwirksam und nur im Rückspülbetrieb wirksam ist,
- einem Auslaß (42) für Rückspülwasser, der mit diesem Teilbereich (B) über einen Leitungskanal (40) verbunden ist,
- wobei zumindest eine separate Leitungsverbindung (30 - 34) von der Reinwasserkammer (30) zu diesem Teilbereich (B) des Filterelements (24) vorhanden ist,
- und in dieser Leitungsverbindung ein Leitungsbereich düsenartig (36) derart ausgebildet ist, daß Reinwasser von der Reinwasserkammer aus mit erhöhter Geschwindigkeit gegen diesen Teilbereich (B) des Filterelements (24) leitbar ist,
dadurch gekennzeichnet, daß das Filterelement (24) an dem ortsfest im Filtergerät angeordneten düsenartigen Leitungsbereich (36, 56, 34) vorbei beweglich angeordnet ist und daß in der Leitungsverbindung (30 - 34) zumindest eine mittels eines Ventils (66) verschließbare Zutrittsöffnung (60) zum Einleiten eines gasförmigen Mediums vorhanden ist.

2. Filtergerät nach Anspruch 1, dadurch gekennzeichnet, daß das gasförmige Meidum die das Filtergerät umgebende Außenluft ist.

3. Filtergerät nach Anspruch 1 oder 2, dadurch gekennzeichnet, daß der Zutritt der Luft im Unterdruckbereich der Düse (36) vorgesehen ist.

4. Filtergerät nach einem der Ansprüche 2 bis 3, dadurch gekennzeichnet, daß die Zutrittsöffnung in der Leitungsverbindung mittels eines Ventils (66) gegen die Außenluft verschließbar ist.

5. Filtergerät nach Anspruch 4, dadurch gekennzeichnet, daß das Ventil (66) ein selbsttätig sich öffnendes und verschließendes Ventil ist, wobei im Rückspülbetrieb, bei dem durch die Leitungsverbindung Reinwasser gegen den Teilbereich (B) des Filterelements (24) strömt, das Ventil (66) offen und wobei im Gegensatz dazu, im Normalbetrieb, das Ventil geschlossen ist.

6. Filtergerät nach einem der Ansprüche 1 bis 5, dadurch gekennzeichnet, daß außer der Außenluft auch ein gasförmiges oder flüssiges Desinfektionsmittel in die Leitungsverbindung (30 - 34) einleitbar ist.

7. Filtergerät nach einem der vorhergehenden Ansprüche, dadurch gekennzeichnet, daß das Filterelement (24) drehbar und der düsenartige Leitungsbereich (36,56,34) ortsfest im Filtergerät angeordnet sind.

8. Filtergerät nach Anspruch 6, dadurch gekennzeichnet, daß das Filterelement (24) eine in etwa ebenflächige Filterfläche besitzt.

9. Filtergerät nach Anspruch 7, dadurch gekennzeichnet, daß die Filterfläche auf einem im Filtergerät ortsfesten Stützkörper (28) auflagerbar und über diesen hinwegbewegbar ist.

10. Filtergerät nach einem der vorhergehenden Ansprüche, dadurch gekennzeichnet,
- daß ein zweites Filterelement (82) zwischen der Rohwasserkammer (22) und einem Bereich strömungsseitig hinter dem ersten Filterelement (24) vorhanden ist,
- ein Abdeckelement (80) vorhanden ist, mit dem dieses zweite Filterelement (82) gegen die Rohwasserkammer (22) hin abdeckbar ist.

11. Filtergerät nach Anspruch 10, dadurch gekennzeichnet, daß dieses Abdeckelement (80) gegen die Kraft einer Feder (86) verschiebbar ist, derart, daß beim Rückspülbetrieb aufgrund der dabei herrschenden Druckverhältnisse das Abdeckelement (80) von dem zweiten Filterelement zumindest teilweise wegbewegt ist.

12. Filtergerät nach Anspruch 11, dadurch gekennzeichnet,
- daß eine zweite Rohwasserkammer (70) vorhanden ist,
- diese zweite Kammer (70) über eine erste Öffnung (72) mit der ersten Rohwasserkammer (22) und über eine zweite Öffnung mit dem zum Auslaß für das Rückspülwasser führenden Leitungskanal (42,89) verbunden ist,
- der Auslaß für das Rückspülwasser durch ein Ventil (44) verschließbar ist,
- die erste Öffnung (72) in der zweiten Rohwasserkammer (70) durch ein Schieberelement (74) verschließbar ist, an dem das Abdeckelement (80) befestigt ist,
- das Schieberelement (74) von der Feder (86) im Normalbetrieb aus der zweiten Rohwasserkammer (70) heraus drückbar und dadurch die erste Öffnung freilegbar ist, wobei
- beim öffnen des Auslaßventils (44) für das Rückspülwasser der Rückspülvorgang ausgelöst wird und durch den sich dabei ändernden hydraulischen Druck im Filtergerät die Feder (86) in der zweiten Rohwasserkammer zusammengedrückt und dadurch das Schieberelement (74) in diese Kammer (70) hineingezogen und bei dieser axialen Verstellung das Abdeckelement (80) von dem zweiten Filterelement (82) weggeschoben wird, so daß das zweite Filterelement dadurch freigelegt wird.

13. Filtergerät nach einem der Ansprüche 8 bis 12, dadurch gekennzeichnet, daß das Filterelement (24) mit seiner Filterfläche senkrecht auf einer Welle (48) befestigt ist, die drehbar gelagert ist.

14. Filtergerät nach Anspruch 13, dadurch gekennzeichnet, daß die Welle manuell (52) oder motorisch antreibbar ist.

15. Filtergerät nach einem der vorhergehenden Ansprüche, dadurch gekennzeichnet, daß ein Gehäusebereich optisch durchsichtig ist, derart, daß die Filteroberfläche des Filterelementes (24) zumindest teilweise sichtbar ist.

16. Filtergerät nach einem der vorhergehenden Ansprüche, dadurch gekennzeichnet, daß eine Einrichtung zum Messen des Durchgangswiderstandes des Filterelements (24) vorhanden ist.

17. Filtergerät nach Anspruch 16, dadurch gekennzeichnet, daß eine Steuereinrichtung vorhanden ist, mit der die Welle mit dem Filterelement (24) in Drehbewegung bringbar ist, derart, daß bei vorgegebenem maximalen Durchgangswiderstand das Ventil (44) für den Auslaß des Rückspülwassers geöffnet wird und die Welle in Drehbewegung versetzt wird, und daß bei vorgegebenem Unterschreiten dieses Durchgangswiderstandes um ein vorgegebenes Maß die Drehbewegung der Welle gestoppt und das Auslaßventil (44) geschlossen wird.

18. Filtergerät nach einem der vorhergehenden Ansprüche, dadurch gekennzeichnet, daß ein in einem Zylinder (100) durch Druck, insbesondere Wasserdruck, verschiebbarer Kolben (101) vorgesehen ist, der in einer ersten Stellung während des Normalbetriebes (Filterbetriebes) steht und in einer zweiten Stellung das Ventil (44) öffnet, das das Rückspülwasser zum Auslaß (42a) für Rückspülwasser führt.

19. Filtergerät nach Anspruch 18, dadurch gekennzeichnet, daß der den Kolben (101) betätigende Wasserdruck vom Reinwasser abgezweigt ist und durch ein Elektroventil, insbesondere ein Magnetmembranventil (105), steuerbar ist.

20. Filtergerät nach Anspruch 18 oder 19, dadurch gekennzeichnet, daß der Kolben (101) durch den Wasserdruck gegen die Kraft einer Feder (108) verschiebbar ist, die den Kolben (101) nach Verringerung des Wasserdruckes in die erste Stellung zurückführt.

21. Filtergerät nach einem der Ansprüche 18 bis 20, dadurch gekennzeichnet, daß der Kolben (101) über eine Ventilstange (109) das Ventil (44) betätigt.

22. Filtergerät nach einem der Ansprüche 18 bis 21, dadurch gekennzeichnet, daß der Kolben (101) während seiner Bewegung von seiner ersten zur zweiten Stellung eine Spindel (110) verdreht, die das Filterelement (24) verdreht.

23. Filtergerät nach Anspruch 21 oder 22, dadurch gekennzeichnet, daß die Ventilstange (109) über einen inneren Längshohlraum (111) die Druckseite des Kolbens (101) mit dem Auslaß (42a) verbindet.

24. Filtergerät nach Anspruch 22 oder 23, dadurch gekennzeichnet, daß Kolben (101) und Spindel (110) und Ventilstange (109) zueinander koaxial angeordnet sind.

## Claims

1. A back-flushable filter apparatus (10) which can be used in domestic water pipes, comprising
- an inlet (14) for untreated water,
- an untreated water chamber (22) connected to said inlet,
- an outlet (16) for clean water,
- a clean water chamber (30) connected to said outlet,
- a filter element (24) which is arranged between the untreated water chamber (22) and the clean water chamber (30) and which has a portion (B) which is inoperative in the normal mode of operation and operative only in the back-flushing mode of operation,
- an outlet (42) for back-flushing water, which is connected to said portion (B) by way of a conduit passage (40),
- wherein there is at least one separate conduit communication (30-34) from the clean water chamber (30) to said portion (B) of the filter element (24)
- and a conduit region is provided in a nozzle-like configuration (36) in said conduit communication in such a way that clean water is directed from the clean water chamber at increased speed towards said portion (B) of the filter element (24), characterised in that the filter element (24) is arranged movably past the nozzle-like conduit region (36, 56, 34) arranged stationarily in the filter apparatus and that provided in the conduit communication (30-34) is at least one feed opening (60) closable by means of a valve (66) for the introduction of a gaseous medium.

2. A filter apparatus according to claim 1 characterised in that the gaseous medium is the outside air which surrounds the filter apparatus.

3. A filter apparatus according to claim 1 or claim 2 characterised in that the feed for the air is provided in the reduced-pressure region of the nozzle (36).

4. A filter apparatus according to one of claims 2 to 3 characterised in that the feed opening in the conduit communication can be closed by means of a valve (66) relative to the outside air.

5. A filter apparatus according to claim 4 characterised in that the valve (66) is an automatically opening and closing valve, wherein the valve (66) is open in the back-flushing mode of operation in which clean water flows through the conduit communication towards the portion (B) of the filter element (24) and wherein in contrast thereto the valve is closed in the normal mode of operation.

6. A filter apparatus according to one of claims 1 to 5 characterised in that besides the outside air a gaseous or liquid disinfecting agent can also be introduced into the conduit communication (30-34).

7. A filter apparatus according to one of the preceding claims characterised in that the filter element (24) is arranged rotatably in the filter apparatus and the nozzle-like conduit region (36, 56, 34) is arranged stationarily in the filter apparatus.

8. A filter apparatus according to claim 6 characterised in that the filter element (24) has a substantially flat-surfaced filter face.

9. A filter apparatus according to claim 7 characterised in that the filter face can be supported on a support body (28) which is stationary in the filter apparatus, and the filter face is movable over the support body.

10. A filter apparatus according to one of the preceding claims characterised in that
- there is a second filter element (82) between the untreated water chamber (22) and a region in the flow direction downstream of the first filter element (24), and
- there is a cover element (80) with which said second filter element (82) can be covered relative to the untreated water chamber (22).

11. A filter apparatus according to claim 10 characterised in that said cover element (80) is displaceable against the force of a spring (86) in such a way that in the back-flushing mode of operation, by virtue of the pressure conditions obtaining in that operation, the cover element (10) is at least partially moved away from the second filter element.

12. A filter apparatus according to claim 11 characterised in that
- there is a second untreated water chamber (70),
- said second chamber (70) is communicated by way of a first opening (72) with the first untreated water chamber (22) and by way of a second opening with the conduit passage (42, 89) leading to the outlet for the back-flushing water,
- the outlet for the back-flushing water is closable by a valve (44),
- the first opening (72) in the second untreated water chamber (70) is closable by a slider element (74) to which the cover element (80) is fixed,
- in the normal mode of operation the slider element (74) can he urged out of the second untreated water chamber (70) by the spring (86) and thereby the first opening can be opened, wherein
- upon opening of the outlet valve (44) for the back-flushing water the back-flushing operation is initiated and due to the hydraulic pressure which changes in that situation in the filter apparatus the spring (86) in the second untreated water chamber is compressed and thereby the slider element (74) is drawn into said chamber (70) and in said axial displacement the cover element (80) is pushed away from the second filter element (82) so that the second filter element is thereby exposed.

13. A filter apparatus according to one of claims 8 to 12 characterised in that the filter element (24) is fixed with its filter face perpendicularly on a shaft (48) which is mounted rotatably.

14. A filter apparatus according to claim 13 characterised in that the shaft is drivable manually (52) or by a motor.

15. A filter apparatus according to one of the preceding claims characterised in that a housing region is optically transparent in such a way that the filter surface of the filter element (24) is at least partially visible.

16. A filter apparatus according to one of the preceding claims characterised in that there is provided a device for measuring the flow resistance of the filter element (24).

17. A filter apparatus according to claim 16 characterised in that there is provided a control device with which the shaft with the filter element (24) can he caused to rotate in such a way that at a predetermined maximum flow resistance the valve (44) for the outlet of the back-flushing water is opened and the shaft is caused to rotate and that when that flow resistance falls below a predetermined value by a predetermined amount the rotary movement of the shaft is stopped and the outlet valve (44) is closed.

18. A filter apparatus according to one of the preceding claims characterised in that there is provided a piston (101) which is displaceable in a cylinder (100) by pressure, in particular water pressure, and which is in a first position during the normal mode of operation (filter mode) and in a second position opens the valve (44) which guides the back-flushing water to the outlet (42a) for back-flushing water.

19. A filter apparatus according to claim 18 characterised in that the water pressure for actuating the piston (101) is branched from the clean water and is controllable by an electrically operated valve, in particular a solenoid diaphragm valve (105).

20. A filter apparatus according to claim 18 or claim 19 characterised in that the piston (101) is displaceable by the water pressure against the force of a spring (108) which returns the piston (101) into the first position after a reduction in the water pressure.

21. A filter apparatus according to one of claims 18 to 20 characterised in that the piston (101) actuates the valve (44) by way of a valve stem (109).

22. A filter apparatus according to one of claims 18 to 21 characterised in that during its movement from its first to the second position the piston (101) turns a spindle (110) which turns the filter element (24).

23. A filter apparatus according to claim 21 or claim 22 characterised in that the valve stem (109) connects the pressure side of the piston (101) to the outlet (42a) by way of an internal longitudinal cavity (111).

24. A filter apparatus according to claim 22 or claim 23 characterised in that the piston (101) and the spindle (110) and the valve stem (109) are arranged coaxially relative to each other.

## Revendications

1. Appareil de filtration (10) à possibilité de rinçage à contre-courant, utilisable dans des canalisations d'eau domestique, comportant
- une admission (14) pour l'eau brute,
- une chambre à eau brute (22) reliée à cette admission,
- une évacuation (16) pour l'eau épurée,
- une chambre à eau épurée (30) reliée à cette évacuation,
- un élément filtrant (24), qui est disposé entre la chambre à eau brute (22) et la chambre à eau épurée (30) et qui présente une zone partielle (B) qui, en fonctionnement normal, est inactive et ne devient active qu'en fonctionnement à rinçage à contre-courant,
- une évacuation (42) pour l'eau de rinçage à contre-courant, reliée à cette zone partielle (B) par un canal de guidage (40),
- où au moins une liaison par conduite (30 à 34) séparée existe, allant de la chambre à eau épurée (30) à cette zone partielle (B) de l'élément filtrant (24),
- et dans cette liaison par conduite étant réalisée une zone de conduite en buse (26), de manière que l'eau épurée puisse être dirigée hors de la chambre à eau épurée à vitesse élevée contre cette zone partielle (B) de l'élément filtrant (24),
- caractérisé en ce que l'élément filtrant (24) est disposé de façon à être mobile en passant sur la zone de conduite en buse (36, 56, 34) disposée fixe dans l'appareil de filtration, et en ce que, dans la liaison par conduite (30 à 34), est réalisée au moins une ouverture d'accès (60) pouvant être obturée au moyen d'une soupape (66) et destinée à l'introduction d'un milieu gazeux.

2. Element filtrant selon la revendication 1, caractérisé en ce que le milieu gazeux est de l'air extérieur entourant l'appareil du filtration

3. Appareil de filtration selon la revendication 1 ou 2, caractérisé en ce que l'accès de l'air est prévu dans la zone en dépression de la buse (36).

4. Appareil de filtration selon l'une des revendications 2 à 3, caractérisé en ce que l'ouverture d'accès est susceptible d'être obturée vis-à-vis de l'air extérieur, dans la liaison par conduite, au moyen d'une soupape (66).

5. Appareil de filtration selon la revendication 4, caractérisé en ce que la soupape (66) est une soupape s'ouvrant et se fermant automatiquement, la soupape (66) étant ouverte pendant le fonctionnement à rinçage à contre-courant lors duquel l'eau épurée passant dans la liaison par conduite s'écoule contre la zone partielle (B) de l'élément filtrant (24) et, au contraire de cela, en fonctionnement normal la soupape est fermée.

6. Appareil de filtration selon l'une des revendications 1 à 5, caractérisé en ce que, hormis l'air extérieur, peut également être introduit dans la liaison par conduite (30 à 34) un moyen de désinfection gazeux ou liquide.

7. Appareil de filtration selon l'une des revendications précédentes, caractérisé en ce que l'élément de filtration (24) est disposé dans l'appareil de filtration, de façon à pouvoir tourner, et la zone de conduite réalisée en forme de buse (36, 56, 34) est réalisée fixe dans l'appareil de filtration.

8. Appareil de filtration selon la revendication 6, caractérisé en ce que l'élément de filtration (24) a une surface de filtration à peu près plane.

9. Appareil de filtration selon la revendication (7), caractérisé en ce que la surface de filtration peut être placée sur un corps d'appui (28) fixe situé dans l'appareil de filtration et se déplacer de celui-ci.

10. Appareil de filtration selon l'une des revendications précédentes, caractérisé en ce qu'
- un deuxième élément filtrant (82) est prévu entre la chambre à eau brute (22) et une zone située, sur le coté de l'écoulement, derrière le premier élément filtrant (24),
- un élément de recouvrement (80) est prévu, à l'aide duquel ce deuxième élément filtrant (82) peut être recouvert, l'isolant de la chambre à eau brute (22).

11. Appareil de filtration selon la revendication 10, caractérisé en ce que cet élément de recouvrement (80) peut être déplacé à l'encontre de la force d'un ressort (86) de manière que, lors du fonctionnement de rinçage à contre-courant, du fait des conditions de pression régnant alors, l'élément de recouvrement (80) est écarté au moins partiellement du deuxième élément filtrant.

12. Appareil de filtration selon la revendication 11, caractérisé
- en ce qu' une deuxième chambre à eau brute (70) est prévue,
- cette deuxième chambre (70) est reliée par une première ouverture (72) à la première chambre à eau brute (22) et est reliée par une deuxième ouverture au canal de conduite (42, 89) menant à l'évacuation destinée à l'eau de rinçage à contre-courant,
- l'évacuation de l'eau de rinçage à contre-courant peut être obturée au moyen d'une soupape (44),
- la première ouverture (72) ménagée dans la deuxième chambre à eau brute (70) peut être obturée par un élément formant tiroir (74), sur lequel l'élément de recouvrement (80) est fixé,
- l'élément formant tiroir (74) est susceptible d'être pressé en fonctionnement normal hors de la deuxième chambre à eau brute (70) et, de ce fait, est susceptible de dégager la première ouverture,
- lors de l'ouverture de la soupape d'évacuation (44), destinée à l'eau de rinçage à contre-courant, le processus de rinçage à contre-courant est déclenché et, du fait de la pression hydraulique fluctuant alors dans l'appareil de filtration, le ressort (86) situé dans la deuxième chambre à eau brute est comprimé et, de ce fait, l'élément formant tiroir (74) est introduit dans cette chambre (70), et, lors de ce déplacement axial, l'élément de recouvrement (80) est écarté du deuxième élément filtrant (82), de sorte que le deuxième élément filtrant se trouve de ce fait dégagé.

13. Appareil de filtration selon l'une des revendications 8 à 12, caractérisé en ce que l'élément filtrant (24) est fixé avec sa face de filtration perpendiculairement sur un arbre (48) qui est monté de façon à pouvoir tourner.

14. Appareil de filtration selon la revendication 12, caractérisé en ce que l'arbre peut être entraîné manuellement (52) ou par un moteur .

15. Appareil de filtration selon l'une des revendications précédentes, caractérisé en ce qu'une zone du carter est transparente optiquement, de manière que la surface de filtration de l'élément filtrant (24) puisse être observée au moins partiellement.

16. Appareil de filtration selon l'une des revendications précédentes, caractérisé en ce qu'est prévu un dispositif pour mesurer la résistance au passage de l'élément filtrant (24).

17. Appareil de filtration selon la revendication 16, caractérisé en ce qu'est prévu un dispositif de commande à l'aide duquel l'arbre équipé de l'élément filtrant peut être mû en rotation de manière que, lors de la survenance d'une résistance maximale au passage prédéterminée, la soupape (44) destinée à l'évacuation de l'eau de rinçage à contre-courant est ouverte et l'arbre est déplacé en mouvement rotatif et, lors de la survenance d'une diminution prédéterminée, au-dessous de cette résistance au passage, d'une valeur prédéterminée, le mouvement rotatif de l'arbre est stoppé et la soupape d'évacuation (44) est fermée.

18. Appareil de filtration selon l'une des revendications précédentes, caractérisé en qu'est prévu un piston (101) déplaçable dans un cylindre (100) sous l'effet de la pression, en particulier de la pression de l'eau, le piston (101) étant placé dans une première position pendant le fonctionnement normal (fonctionnement de filtration) et, lorsqu'il se trouve dans une deuxième position, ouvrant la soupape (44) qui guide l'eau de rinçage à contre-courant vers l'évacuation (42a) de l'eau de rinçage à contre-courant.

19. Appareil de filtration selon la revendication 18, caractérisé en ce que la pression d'eau actionnant le piston (101) est obtenue par une ramification à partir de l'eau épurée et peut être commandée par une électrovanne, en particulier une électrovanne à membrane (105).

20. Appareil de filtration selon la revendication 18 ou 19, caractérisé en ce que le piston (101) est déplaçable par la pression de l'eau, à l'encontre de la force d'un ressort (108) qui ramène le piston (101) dans la première position, lorsque la pression d'eau diminue.

21. Appareil de filtration selon l'une des revendications 18 à 20, caractérisé en ce que le piston (101) actionne la soupape (44) par l'intermédiaire d'une tige de piston (109).

22. Appareil de filtration selon l'une des revendications 18 à 21, caractérisé en ce que le piston (101) fait tourner pendant son déplacement de passage de sa première à la deuxième position une broche (110), qui fait tourner l'élément filtrant (24).

23. Appareil de filtration selon la revendication 21 ou 22, caractérisé en ce que la tige de soupape (109) relie par un espace creux allongé interne (111) le coté sous pression du piston (101) à l'évacuation (42a).

24. Appareil de filtration selon la revendication 22 ou 23, caractérisé en ce que le piston (101), la broche et la tige de soupape (109) sont disposés coaxialement les uns par rapport aux autres.
